# DEMANDE DE BREVET EUROPEEN

(11) **EP 3 182 214 A1**
(43) Date de publication de la demande: **21.06.2017**
(21) Numéro de dépôt: 15200456.0
(22) Date de dépôt: 16.12.2015
(51) Int. Cl.: G04B 15/14, G04B 17/04, G04B 17/06, F16C 11/12

(54) **OSCILLATEUR MÉCANIQUE POUR PIÈCE D'HORLOGERIE, MÉCANISME DE RÉGLAGE COMPORTANT CET OSCILLATEUR MÉCANIQUE, ET MOUVEMENT D'HORLOGERIE**

(71) Demandeur: Société anonyme de la Manufacture d'Horlogerie Audemars Piguet & Cie, 1348 Le Brassus (CH)
(72) Inventeur: Robuschi, Nicolò, 43015 Noceto (IT); Papi, Giulio, 2300 La Chaux-de-Fonds (CH)
(74) Mandataire: BOVARD AG

(57) **Abrégé**

Un oscillateur mécanique pour pièce d'horlogerie comprend une embase de montage (18) et un balancier (6). Des première, deuxième, troisième et quatrième lames élastiquement flexibles (23a, 23b) portent et rappellent le balancier (6) de manière que ce balancier (6) soit oscillant angulairement dans un plan d'oscillation. Chacune des première et deuxième lames élastiquement flexibles (23a) comporte une première extrémité (24) rigidement unie à l'embase de montage (18). Chacune des troisième et quatrième lames élastiquement flexibles (23b) comporte une première extrémité (25) rigidement unie au balancier (6). Les deuxièmes extrémités (26) des lames élastiquement flexibles (23a, 23b) sont rigidement unies les unes aux autres.

## Description

### Domaine technique de l'invention

La présente invention se rapporte au domaine de l'horlogerie mécanique. Plus précisément, elle concerne un oscillateur mécanique pour pièce d'horlogerie, ainsi qu'un mécanisme de réglage qui comprend cet oscillateur mécanique et qui est plus précisément un mécanisme de réglage d'une vitesse moyenne dans un mouvement d'horlogerie. L'invention concerne également un mouvement d'horlogerie.

### État de la technique

Dans un mouvement d'horlogerie, un organe moteur fournit l'énergie d'entraînement, qu'un rouage de finissage transmet à la roue d'échappement d'un échappement interagissant avec un oscillateur mécanique. Les vitesses des engrenages dans le rouage de finissage sont toutes proportionnelles à une vitesse de rotation, qui est la vitesse de rotation moyenne de la roue d'échappement. La vitesse de rotation moyenne de cette roue d'échappement est imposée par les oscillations de l'oscillateur mécanique. Plus précisément, la fonction de l'oscillateur mécanique est de fournir la cadence à laquelle se succèdent les pas angulaires de la roue d'échappement. Cette cadence doit être la plus stable possible.

Un oscillateur mécanique classiquement utilisé en horlogerie résulte de l'association d'un balancier jouant le rôle d'un volant d'inertie, d'un arbre terminé par des pivots et permettant le montage de ce balancier de manière pivotante, et d'un ressort spiral produisant un couple de rappel.

Dans la demande de brevet européen EP 1 736 838, il est décrit l'association d'un échappement et d'un oscillateur dont le balancier est porté par plusieurs lames élastiquement flexibles.

Dans la demande de brevet suisse CH 709 291 également, il est proposé un oscillateur mécanique sans ressort spiral ni arbre de montage. Son balancier est porté par plusieurs lames élastiquement flexibles. Le balancier pivote sur lui-même, moyennant une flexion des lames élastiquement flexibles qui rappellent ce balancier vers une position de point mort, en plus de le porter. Les lames élastiquement flexibles sont décalées entre elles dans le sens de l'épaisseur du balancier. Elles se croisent aux 7/8^{ème} de leurs longueurs respectives.

Au sens où on l'entend dans le domaine de l'horlogerie, l'isochronisme est l'aptitude d'un oscillateur mécanique à osciller à une fréquence qui ne varie pas en fonction de l'amplitude des oscillations de cet oscillateur mécanique. L'anisochronisme s'entend d'une déficience d'un oscillateur à posséder cette aptitude. Les oscillations de l'oscillateur sont entretenues par l'énergie fournie par l'organe moteur. Dans la plupart des mouvements d'horlogerie connus, l'amplitude des oscillations de l'oscillateur baisse à mesure que le couple fourni par l'organe moteur diminue, ce qui est notamment le cas lorsque l'organe moteur est un ressort qui se désarme progressivement. C'est pourquoi l'on souhaite que l'isochronisme de l'oscillateur mécanique réglant la vitesse de rotation moyenne de la roue d'échappement dans un mouvement d'horlogerie soit le meilleur possible.

A cet égard, l'oscillateur proposé dans la demande de brevet suisse CH 709 291 susmentionnée présente un mauvais isochronisme, si bien que le mouvement d'horlogerie qui l'incorpore compte le temps avec une exactitude qui varie à mesure que se désarme son organe moteur. En d'autres termes, un mouvement d'horlogerie pourvu de l'oscillateur proposé dans la demande suisse CH 709 291 possède une marche diurne qui n'est pas la même selon que l'organe moteur de ce mouvement horloger est peu ou très armé.

### Résumé de l'invention

L'invention a au moins pour but de permettre qu'une réduction voire une suppression des frottements se produisant au niveau du support d'un balancier d'un oscillateur mécanique soit obtenu sans que l'exactitude d'un mouvement d'horlogerie fonctionnant à l'aide de cet oscillateur mécanique soit trop affecté par le degré d'armage de l'organe moteur.

Selon l'invention, ce but est atteint grâce à un oscillateur mécanique pour pièce d'horlogerie comprenant une embase de montage, un balancier et plusieurs lames élastiquement flexibles dans un plan d'oscillation. Ces lames élastiquement flexibles portent et rappellent le balancier de manière que ce balancier soit oscillant angulairement dans le plan d'oscillation. Au moins une première et une deuxième lame élastiquement flexible parmi les lames élastiquement flexibles comportent chacune deux extrémités opposées, à savoir une première extrémité rigidement unie à l'embase de montage et une deuxième extrémité. Au moins une troisième et une quatrième lame élastiquement flexible parmi les lames élastiquement flexibles comportent chacune deux extrémités opposées, à savoir une première extrémité rigidement unie au balancier et une deuxième extrémité. Les deuxièmes extrémités des première, deuxième, troisième et quatrième lames élastiquement flexibles au moins sont rigidement unies les unes aux autres.

On a trouvé que l'oscillateur mécanique défini ci-dessus peut posséder un très bon isochronisme. On a également trouvé que cet oscillateur mécanique peut être configuré de manière que, lorsque son balancier oscille, le centre de gravité de ce balancier reste dans un plan, c'est-à-dire ne s'écarte pas ou pratiquement pas de ce plan d'un côté puis de l'autre. On pense que cela permet d'obtenir le très bon ischronisme.

L'oscillateur mécanique défini ci-dessus peut incorporer une ou plusieurs autres caractéristiques avantageuses, isolément ou en combinaison, en particulier parmi celles précisées ci-après.

Avantageusement, les deuxièmes extrémités des première, deuxième, troisième et quatrième lames élastiquement flexibles sont rigidement unies les unes aux autres par une partie d'accouplement.

Avantageusement, les premières extrémités des première et deuxième lames élastiquement flexibles sont décalées angulairement l'une de l'autre d'un angle compris entre 80° et 150°, autour d'un axe perpendiculaire au plan d'oscillation et centré sur la partie d'accouplement, les premières extrémités des troisième et quatrième lames élastiquement flexibles étant décalées angulairement l'une de l'autre d'un angle compris entre 80° et 150°, autour de l'axe perpendiculaire au plan d'oscillation et centré sur la partie d'accouplement.

Lorsqu'il en est ainsi, les oscillations angulaires du balancier dans le plan d'oscillation, autour d'un axe de pivotement virtuel, sont favorisées alors que sont défavorisés les autres modes vibratoires, c'est-à-dire les modes vibratoires parasites.

Avantageusement, les premières extrémités des première et deuxième lames élastiquement flexibles sont décalées angulairement l'une de l'autre d'un angle de l'ordre de 120°, autour de l'axe perpendiculaire au plan d'oscillation et centré sur la partie d'accouplement, les premières extrémités des troisième et quatrième lames élastiquement flexibles étant décalées angulairement l'une de l'autre d'un angle de l'ordre de 120°, autour de l'axe perpendiculaire au plan d'oscillation et centré sur la partie d'accouplement.

Lorsqu'il en est ainsi, les oscillations angulaires du balancier dans le plan d'oscillation, autour d'un axe de pivotement virtuel, sont favorisées alors que sont défavorisés les autres modes vibratoires, c'est-à-dire les modes vibratoires parasites.

Avantageusement, au moins une partie de l'embase de montage, au moins une partie du balancier et les première, deuxième, troisième et quatrième lames élastiquement flexibles font parties d'une même pièce d'un seul tenant. Lorsque tel est le cas, une solution compacte peut être obtenue. Elle peut l'être à un coût réduit dans la mesure où les première, deuxième, troisième et quatrième lames élastiquement flexibles, au moins une partie de l'embase de montage et au moins une partie du balancier peuvent être réalisées en même temps avec le ou les mêmes appareils. En outre, une réduction des composants à assembler peut également être obtenue. De plus, une précision accrue peut être obtenue quant à la géométrie de l'ensemble, en particulier lorsque la pièce d'un seul tenant est réalisée au moyen du procédé DRIE ou du procédé LiGA.

Avantageusement, au moins une partie de l'embase de montage, au moins une partie du balancier et les première, deuxième, troisième et quatrième lames élastiquement flexibles sont réalisées en silicium et/ou en oxyde de silicium.

Avantageusement, la partie d'accouplement se trouve sensiblement à égale distance des premières extrémités des première, deuxième, troisième et quatrième lames élastiquement flexibles.

Avantageusement, le balancier possède un centre de gravité se trouvant sensiblement à la partie d'accouplement.

Avantageusement, les première et deuxième lames élastiquement flexibles sont sensiblement symétriques entre elles par rapport à un plan. Avantageusement, les troisième et quatrième lames élastiquement flexibles sont sensiblement symétriques entre elles par rapport à ce plan.

Avantageusement, les première et troisième lames élastiquement flexibles s'étendent dans un même plan perpendiculaire au plan d'oscillation. Avantageusement, les deuxième et quatrième lames élastiquement flexibles s'étendent dans un même plan perpendiculaire au plan d'oscillation.

Avantageusement, l'embase de montage comporte deux butées qui sont des butées de fin de course pour le balancier et qui définissent une course angulaire maximale du balancier en empêchant ce balancier d'aller au-delà de deux extrémités opposées de cette course angulaire maximale. Lorsque tel est le cas, les deux lames élastiquement flexibles sont protégées contre une détérioration résultant d'une déformation trop importante, telle qu'une déformation consécutive à un choc.

Avantageusement, le balancier comporte deux ailes opposées et une traverse reliant ces deux ailes entre elles, les premières extrémités des troisième et quatrième lames élastiquement flexibles étant rigidement unies à ladite traverse. Lorsque tel est le cas, l'embase de montage peut ne pas être entourée par le balancier, ce qui offre une plus grande liberté de conception.

L'invention a également pour objet un mécanisme de réglage d'une vitesse de rotation moyenne dans un mouvement d'horlogerie. Ce mécanisme de réglage comprend un oscillateur mécanique tel que défini précédemment, ainsi qu'un échappement agencé pour interagir avec l'oscillateur mécanique de manière que l'échappement transfère à l'oscillateur mécanique l'énergie d'entretien des oscillations de cet oscillateur mécanique et qu'une fréquence de l'oscillateur mécanique règle une vitesse de rotation moyenne d'une roue d'échappement de l'échappement.

Le mécanisme de réglage défini ci-dessus peut incorporer une ou plusieurs autre caractéristiques avantageuses, isolément ou en combinaison, en particulier parmi celles précisées ci-après.

Un avantage de l'oscillateur défini précédemment est que les oscillations de son balancier peuvent avoir une amplitude compatible avec l'utilisation d'un échappement à repos frottant. Dans ce sens, l'échappement comporte avantageusement une ancre comprenant deux palettes rigides qui sont solidaires rigidement du balancier et agencées pour coopérer alternativement avec une denture de la roue d'échappement lorsque le balancier oscille angulairement. Lorsque tel est le cas, le couple moteur d'entraînement de la roue d'échappement n'interfère pas ou pratiquement pas dans les oscillations du balancier, sauf lors des phases d'impulsion. On a constaté que cela rend l'exactitude du comptage du temps moins dépendante du degré d'armage de l'organe moteur.

Avantageusement, chaque palette comporte un côté amont formant une surface de repos pour bloquer successivement des dents de la denture vers l'aval à l'encontre d'un couple moteur d'entraînement de la roue d'échappement, chaque palette comportant une surface terminale formant une surface d'impulsion pour recevoir successivement des impulsions de la part de la denture.

Avantageusement, chaque surface de repos se recourbe vers l'autre surface de repos. Lorsque tel est le cas, l'exactitude du comptage du temps est le plus souvent encore moins dépendante du degré d'armage de l'organe moteur.

Avantageusement, chaque surface de repos se recourbe vers l'autre surface de repos de manière à pouvoir glisser sur une dent de la denture, lors d'une oscillation angulaire du balancier, en ne provoquant pas ou sensiblement pas de mouvement de rotation de la roue d'échappement. Lorsque tel est le cas, l'exactitude du comptage du temps est encore moins dépendante du degré d'armage de l'organe moteur.

Avantageusement, chaque surface de repos possède une courbure sensiblement constante dans le sens de sa longueur et a un centre de courbure sensiblement positionné toujours au même endroit, sensiblement sur un axe de pivotement virtuel du balancier et/ou au niveau de la partie d'accouplement. Lorsque tel est le cas, l'exactitude du comptage du temps est encore moins dépendante du degré d'armage de l'organe moteur.

L'invention a encore pour objet un mouvement d'horlogerie, comprenant un organe moteur, un rouage entraîné par l'organe moteur, et un mécanisme de réglage tel que défini précédemment, la roue d'échappement étant entraînée par le rouage.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, parmi lesquels :
- la figure 1 est une vue schématique d'un mouvement d'horlogerie selon un mode de réalisation de l'invention,
- la figure 2 est une vue en plan d'un mécanisme de réglage dans lequel un échappement et un oscillateur mécanique selon un mode de réalisation de l'invention sont associés de manière à pouvoir interagir pour régler les vitesses de rotation moyennes au sein d'un rouage de finissage du mouvement d'horlogerie de la figure 1,
- la figure 3 est une vue en plan sur laquelle l'oscillateur mécanique du mécanisme de réglage de la figure 2 est représenté seul, sans l'échappement,
- la figure 4 est une vue en perspective représentant le même oscillateur mécanique que la figure 3, ainsi qu'une ancre qui est fixée à un balancier de cet oscillateur mécanique et qui fait partie de l'échappement visible à la figure 2,
- la figure 5 est un agrandissement d'une vue partielle extraite d'une vue en plan représentant le même sous-ensemble résultant de l'association d'un oscillateur mécanique et d'une ancre que la figure 4, et
- les figures 6 à 9 représentent le même mécanisme de réglage que la figure 2 et montrent des positions successives que le balancier de l'oscillateur mécanique, l'ancre et une roue d'échappement occupent au cours de l'un de plusieurs cycles identiques se répétant en fonctionnement.

### Description d'un mode préférentiel de l'invention

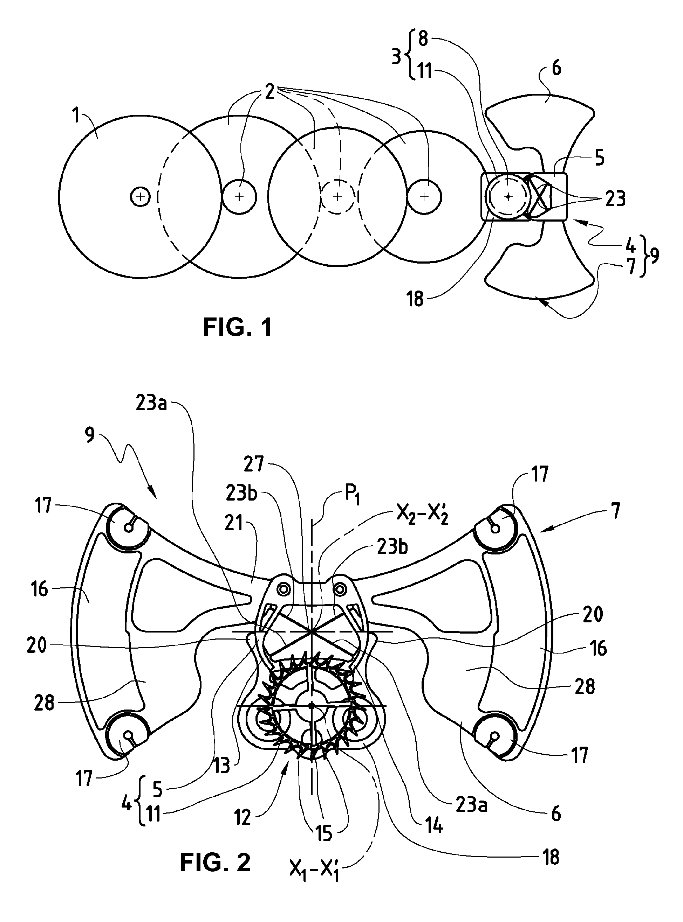

Sur la figure 1, un mouvement d'horlogerie selon un mode de réalisation de l'invention comporte un barillet 1, dont un organe moteur non représenté tel qu'un ressort spiral produit un couple moteur et qui, du fait de ce couple moteur, entraîne un rouage de finissage 2. Ce rouage de finissage 2 entraîne à son tour un mobile d'échappement 3, qui fait partie d'un échappement 4 comprenant en outre une ancre 5. Cette ancre 5 est portée par le balancier 6 d'un oscillateur mécanique 7.

Une platine non représentée ou un châssis d'un autre type porte le barillet 1, le mobile d'échappement 3, l'oscillateur mécanique 7 et le rouage de finissage 2, dont les mobiles peuvent être maintenus en place d'une manière connue en soi, par des ponts également non représentés. Le mobile d'échappement 3 comporte un pignon 8, qui engrène avec une roue du rouage de finissage 2.

Sur la figure 2, l'échappement 4 et l'oscillateur mécanique 7 sont associés de manière à former ensemble un mécanisme 9 de réglage d'une vitesse de rotation moyenne dans le mouvement d'horlogerie de la figure 1. L'échappement 4 est un échappement à repos frottant. Rotatif sur un axe de rotation X₁-X'₁, son mobile d'échappement 3 comporte, outre le pignon 8, une roue d'échappement 11 comprenant une denture 12 périphérique, qui est prévue pour coopérer alternativement avec une palette d'entrée 13 et une palette de sortie 14 de l'ancre 5.

La denture 12 est constituée d'une succession de dents triangulaires 15, dont chacune se termine par une extrémité libre sensiblement pointue.

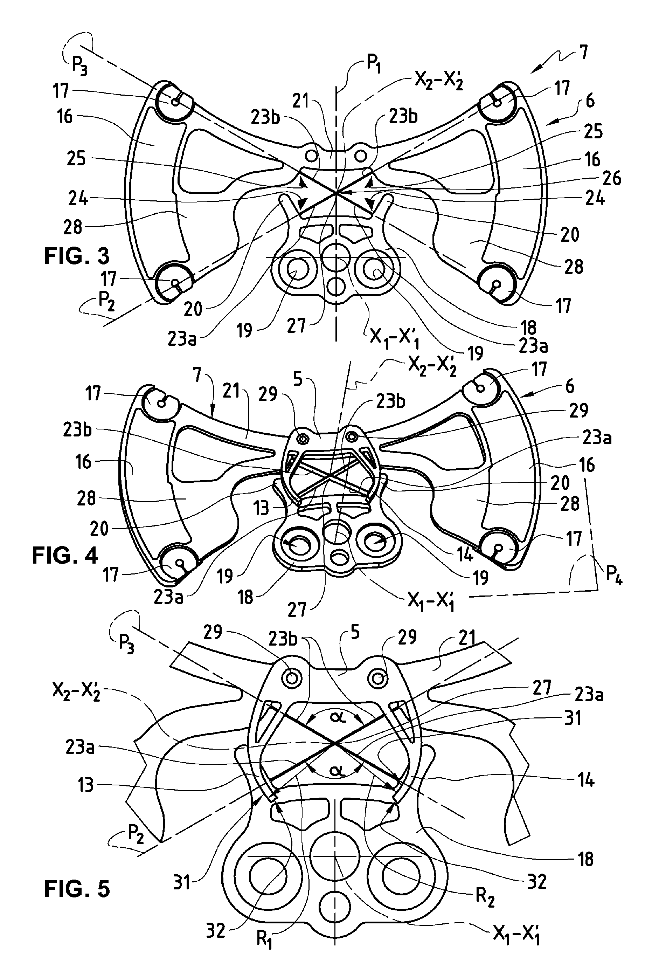

Ainsi qu'on peut le voir aux figures 3 et 4, l'oscillateur mécanique 7 est symétrique par rapport à un plan de symétrie P₁. Pour l'essentiel, c'est-à-dire si l'on excepte des masselottes 16 et 17 que portent son balancier 6, cet oscillateur mécanique 7 est aplati et s'étend dans un plan P₄ perpendiculaire au plan de symétrie P₁. Ce plan P₄ est le plan de la feuille à la figure 3.

L'oscillateur mécanique 7 comporte une embase fixe de montage 18, qui présente la forme d'une plaque et qui est destinée à être fixée rigidement à la platine du mouvement d'horlogerie, au moyen de vis non représentées ou d'autres organes de fixation. Des trous traversants 19 pour le passage de telles vis sont percés dans l'embase de montage 18, dans le sens de son épaisseur. Cette embase de montage 18 comporte deux doigts latéraux, qui forment des butées de fin de course angulaire 20 pour le balancier 6 et qui sont dirigés vers une traverse 21 de ce balancier 6.

Une articulation élastique constitutive de l'oscillateur mécanique 7 comprend une première lame élastiquement flexible 23a, une deuxième lame élastiquement flexible 23a, une troisième lame élastiquement flexible 23b, un quatrième lame élastiquement flexible 23b et une partie d'accouplement 27. Cette articulation élastique relie l'embase de montage 18 à la traverse 21. Elle porte le balancier 6 en étant elle-même portée par l'embase de montage 18. L'embase de montage 18, les lames élastiquement flexibles 23a et 23b, la partie d'accouplement 27 et le balancier 6 à l'exception des masselottes 16 et 17 font partie d'une pièce d'un seul tenant.

Les lames élastiquement flexibles 23a sont sensiblement symétriques l'une de l'autre par rapport au plan de symétrie P₁. Il en est de même des lames élastiquement flexibles 23b.

Chaque lame élastiquement flexible 23a comporte une première extrémité 24, au niveau de laquelle elle se raccorde rigidement sur l'embase de montage 18. En d'autres termes, chaque lame élastiquement flexible 23a est unie à l'embase de montage 18 par une liaison de type encastrement. Chaque lame élastiquement flexible 23b comporte une première extrémité 25, au niveau de laquelle elle se raccorde rigidement à la traverse 21. En d'autres termes, chaque lame élastiquement flexible 23b est unie à la traverse 21 par une liaison de type encastrement.

A l'opposé de sa première extrémité 24 ou 25, chacune des lames élastiquement flexibles 23a et 23b comporte une deuxième extrémité 26 et se raccorde sur la partie d'accouplement ridide 27 au niveau cette deuxième extrémité 26. Les deuxièmes extrémités 26 des lames élastiquement flexibles 23a et 23b sont rigidement unies entre elles.

Chacune des lames élastiquement flexibles 23a et 23b s'étend selon une surface réglée dont toutes les génératrices sont perpendiculaires au plan P₄ de l'oscillateur mécanique 7. Les lames 23a et 23b sont ainsi élastiquement flexibles dans le plan P₄ et elles autorisent des oscillations angulaires du balancier 6 dans ce plan P₄, autour d'un axe de pivotement virtuel X₂-X'₂. En plus d'être le plan de l'oscillateur mécanique 7, le plan P₄ est donc le plan d'oscillation du balancier 6.

Dans l'exemple représenté, chacune des lames élastiquement flexibles 23a et 23b est rectiligne, ce qui pourrait toutefois ne pas être le cas. La première lame élastiquement flexible 23a et la troisième lame élastiquement flexible 23b s'étendent dans le même plan P₂, ce qui pourrait ne pas être le cas. La deuxième lame élastiquement flexible 23a et la quatrième lame élastiquement flexible 23b s'étendent dans le même plan P₃, ce qui pourrait ne pas être le cas. Sécants au niveau de la partie d'accouplement 27, les plans P₂ et P₃ sont les surfaces réglées susmentionnées et sont perpendiculaires au plan P₄.

La partie d'accouplement 27 se trouve à distance des premières extrémités 24 et 25. De préférence, elle se trouve plus précisément à égale distance de ces premières extrémités 24 et 25. L'axe de pivotement virtuel X₂-X'₂ est centré sur la partie d'accouplement 27. Il demeure sensiblement dans le plan de symétrie P₁ lorsque le balancier 6 oscille.

Outre qu'elles supportent le balancier 6 de telle manière que celui-ci peut osciller angulairement autour de son axe de pivotement virtuel X₂-X'₂, les lames élastiquement flexibles 23a et 23b rappellent élastiquement ce balancier 6 vers une position de point mort, qui est celle que le balancier 6 occupe aux figures 2 à 5.

Sur la figure 5, l'angle α est l'angle entre les plans P₂ et P₃. Plus précisément, cet angle α est l'angle dont la première extrémité 24 de l'une des lames élastiquement flexible 23a et la première extrémité 24 de l'autre lame élastiquement flexible 23a sont décalées angulairement l'une de l'autre autour d'un axe qui se confond avec l'axe de pivotement virtuel X₂-X'₂ dans l'exemple représenté et qui est plus précisément l'axe perpendiculaire au plan P₄ et centré sur la partie d'accouplement 27. L'angle dont les premières extrémités 25 sont décalées angulairement l'une de l'autre pourrait ne pas avoir la même valeur que l'angle dont les premières extrémités 24 sont décalées angulairement l'une de l'autre. Dans l'exemple représenté, l'angle α est également l'angle dont les premières extrémités 25 des lames élastiquement flexibles 23b sont angulairement décalées l'une de l'autre autour l'axe perpendiculaire au plan P₄ et centré sur la partie d'accouplement 27. L'angle α est avantageusement compris entre 80° et 150°. De préférence, l'angle α est de l'ordre de 120°.

On a découvert que les angles α compris entre 80° et 150° sont parmi les angles les plus défavorables à l'apparition de modes vibratoires parasites, c'est-à-dire de modes vibratoires autres que celui dans lequel le balancier 6 oscille angulairement autour de son axe de pivotement virtuel X₂-X'₂, dans le plan d'oscillation P₄. On a découvert qu'un angle α de l'ordre de 120° donne les meilleurs résultats en termes de lutte contre l'apparition des modes vibratoires parasites susmentionnés.

Comme le balancier 6 est monté pivotant sans recourir à un arbre retenu et guidé par deux paliers, les frottements au niveau de tels paliers n'existent pas et les pertes dues aux frottements sont fortement réduites, si bien que l'oscillateur mécanique 7 possède un excellent facteur de qualité.

De plus, l'absence de frottement au niveau de paliers de retenue d'un arbre se traduit par une absence d'usure et par l'inutilité d'une lubrification.

L'absence de pivots et de paliers guidant ces pivots dans l'oscillateur mécanique 7 a encore un autre avantage. Cet autre avantage est que l'oscillateur mécanique 7 possède un fonctionnement peu sinon pas sensible à l'orientation de cet oscillateur mécanique 7 par rapport à la direction de la gravité. A l'inverse, lorsqu'un balancier est monté au moyen de deux pivots et de deux paliers guidant ces pivots, les frottements entre les pivots et les paliers sont fonction de l'orientation du balancier par rapport à la direction de la gravité.

Dans l'exemple représenté, les lames élastiquement flexibles 23a sont au nombre de deux. Selon une variante non représentée et ne sortant pas du cadre de l'invention, plus de deux lames élastiquement flexibles 23a pourraient relier l'embase de montage 18 à la partie d'accouplement 27.

Dans l'exemple représenté, les lames élastiquement flexibles 23b sont au nombre de deux. Selon une variante non représentée et ne sortant pas du cadre de l'invention, plus de deux lames élastiquement flexibles 23b pourraient relier la partie d'accouplement 27 au balancier 6.

De retour sur la figure 3, le balancier 6 comporte deux ailes 28 planes que la traverse 21 relie l'une à l'autre. Chaque aile 28 porte une masselotte 16 et deux masselottes 17. Ces masselottes 16 et 17 ont pour fonction d'augmenter l'inertie du balancier 6 par rapport à son axe de pivotement X₂-X'₂. Les masselottes 17 sont des anneaux fendus rapportés et sont répartis sur les quatre sommets d'un rectangle. Comme elles peuvent être pivotées sur elles-mêmes, ces masselottes 17 permettent de modifier l'inertie du balancier 6 et d'ajuster ainsi la fréquence de l'oscillateur mécanique 7.

Les masselottes 16 et 17 peuvent être réalisées ou non en un même matériau. Le reste du balancier 6 est réalisé en un matériau dont la masse volumique est inférieure à celle(s) du ou des matériaux constitutifs des masselottes 16 et 17. De la sorte, le ratio entre l'inertie du balancier 6 par rapport à son axe de pivotement X₂-X'₂ et le poids de ce balancier 6 est élevé, si bien que l'oscillateur mécanique 7 est peu sensible aux chocs tout en possédant un pouvoir réglant élevé.

De préférence, le barycentre du balancier 6 se trouve sensiblement sur l'axe de pivotement virtuel X₂-X'₂ et au niveau de la partie d'accouplement 27.

De retour sur la figure 5, la palette d'entrée 13 et la palette de sortie 14 sont l'une et l'autre rigides. Elles sont en outre rigidement solidaires du balancier 6, dans la mesure où l'ancre 5 est fixée rigidement à la traverse 21, au moyen de deux chevilles d'assemblage 29 dans l'exemple représenté.

Dans la présente description et dans les revendications annexées, les termes « aval » et « amont », ainsi que les termes analogues, se réfèrent au sens de progression d'une dent 15 au niveau des palettes 13 et 14.

Chaque palette 13 ou 14 comporte une surface de repos 31 destinée à stopper temporairement chaque dent 15 vers l'aval, ainsi qu'une surface d'impulsion 32 destinée à recevoir une impulsion de la part de chaque dent 15, c'est-à-dire une poussée par laquelle une énergie d'entretien des oscillations de l'oscillateur mécanique 7 est transférée de l'organe moteur du barillet 1 à l'oscillateur mécanique 7.

Chaque surface de repos 31 est formée par un côté amont d'une des palettes 13 et 14. Chaque surface de repos 31 est courbe dans le sens de sa longueur, de manière à se recourber vers l'autre surface de repos 31. Chaque surface de repos 31 possède un rayon de courbure constant ou sensiblement constant R₁ ou R₂, ainsi qu'un centre de courbure localisé de manière sensiblement fixe, sur l'axe de pivotement virtuel X₂-X'₂.

Chaque surface d'impulsion 32 est une surface terminale à l'extrémité d'une des palettes 13 et 14.

De préférence, l'embase de montage 18, les lames élastiquement flexibles 23a et 23b, ainsi que le balancier 6 à l'exception des masselottes 16 et 17 font partie d'une même pièce d'un seul tenant réalisée en un matériau monocristallin, notamment en un matériau monocristallin à base de silicium ou à base de quartz. Dans l'exemple représenté, cette pièce d'un seul tenant est de préférence majoritairement faite de silicium, auquel cas elle possède avantageusement une couche superficielle d'oxyde de silicium. Par exemple, l'oscillateur mécanique 7 à l'exception des masselottes 16 et 17 peut être découpée dans une tranche de silicium, encore appelée wafer, par gravure ionique réactive profonde, c'est-à-dire en mettant en oeuvre le procédé communément appelé « DRIE » (acronyme de « Deep Reactive Ion Etching »). On notera que les lames élastiquement flexibles 23a et 23b sont facilement réalisables au moyen de ce procédé DRIE.

Les masselottes 16 et 17 peuvent être métalliques. Dans l'exemple représenté, elles sont faites d'or. Les masselottes 16 peuvent être obtenues par croissance galvanique.

De préférence, l'ancre 5 est une pièce d'un seul tenant réalisée en un matériau monocristallin, notamment en un matériau monocristallin à base de silicium ou à base de quartz. Dans l'exemple représenté, l'ancre 5 est de préférence majoritairement faite de silicium, auquel cas elle possède avantageusement une couche superficielle d'oxyde de silicium. Par exemple, l'ancre 5 peut être découpée dans une tranche de silicium, encore appelée wafer, par gravure ionique réactive profonde, c'est-à-dire en mettant en oeuvre le procédé communément appelé « DRIE ». Au moins au niveau de leurs surfaces de repos 31 et de leurs surfaces d'impulsion 32, les palettes 13 et 14 sont avantageusement revêtues d'un revêtement ayant pour fonction de réduire le coefficient de frottement et d'augmenter la résistance à l'usure. Par exemple, ce revêtement peut être en diamant, notamment en diamant poly cristallin, ou en DLC (acronyme de Diamond-Like Carbon), c'est-à-dire en carbone sous forme de diamant amorphe, ou bien encore en grafène. Les dents 15 de la roue d'échappement 11 peuvent également être au moins localement revêtue d'un tel revêtement ayant pour fonction de réduire le coefficient de frottement et d'augmenter la résistance à l'usure.

De préférence, les deux chevilles d'assemblage 29 sont faites d'un alliage de titane, par exemple de l'alliage Ti6Al4V, et maintiennent assemblés deux éléments ayant une âme en silicium, à savoir la traverse 21 et l'ancre 5.

Sans sortir du cadre de l'invention, l'oscillateur mécanique 7 et/ou l'ancre 5 et/ou les deux chevilles d'assemblage 29 peuvent être réalisés en d'autres matériaux que ceux mentionnés ci-dessus. Par exemple, tout ou partie de l'oscillateur mécanique 7 et/ou de l'ancre 5 peut être réalisé à l'aide du procédé « LiGA » (acronyme de « Lithographie, Galvanoformung und Abformung »). Egalement, tout ou partie de l'oscillateur mécanique 7 et/ou de l'ancre 5 peut être découpé dans une plaque de métal, par laser.

Ainsi qu'on peut le voir à la figure 2, le mécanisme de réglage 9 possède une constitution particulièrement simple. En particulier, les mêmes moyens, à savoir les lames élastiquement flexibles 23a et 23b, rendent pivotant à la fois l'ancre 5 et le balancier 6. Ces moyens possèdent un fonctionnement qui ne produit pas ou pratiquement pas de frottements, ainsi que cela a déjà été mentionné précédemment. A titre de comparaison, un mécanisme de réglage résultant de l'association d'un échappement à ancre suisse et d'un oscillateur mécanique à balancier et spiral possède un fonctionnement dans lequel des frottements ont lieu au niveau des paliers guidant l'arbre de support de l'ancre et au niveau des paliers guidant l'arbre de support du balancier.

Le couple de rappel exercé par les lames élastiquement flexibles 23a et 23b est sensiblement proportionnel à l'angle dont le balancier 6 est pivoté à partir de sa position de point mort, autour de l'axe de pivotement virtuel X₂-X'₂. Cela contribue à conférer un bon isochronisme à l'oscillateur mécanique 7.

De plus, lorsque le balancier 6 oscille, son centre de gravité reste dans le plan de symétrie P₁, c'est-à-dire ne s'écarte pas ou pratiquement pas de ce plan de symétrie P₁ d'un côté puis de l'autre. Cela contribue également aux bonnes performances de l'oscillateur mécanique 7 en termes d'isochronisme.

A titre de comparaison, dans l'oscillateur décrit dans la demande de brevet suisse CH 709 291 susmentionnée, l'axe de pivotement oscille angulairement lors du fonctionnement et le centre de gravité du balancier fait de même en ayant l'effet d'un balourd.

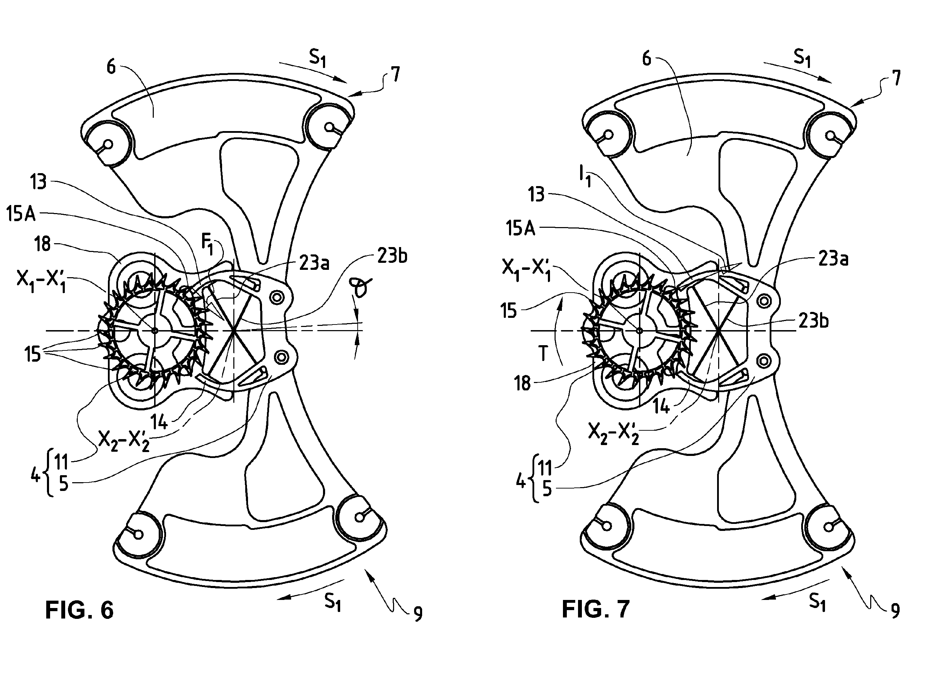

Les figures 6 à 9 illustrent chacune l'un de plusieurs états dans lesquels le mécanisme de réglage 9 se trouve successivement au cours de son fonctionnement. En fonctionnement, l'amplitude angulaire des oscillations du balancier 6 est de préférence de l'ordre de 6 degrés, ce qui est le cas dans l'exemple représenté. Cette amplitude angulaire est compatible avec l'utilisation d'un échappement à repos frottant tel que l'échappement 4. De préférence, l'oscillateur mécanique 7 est dimensionné pour osciller à une fréquence de l'ordre de 25 Hz, ce qui est le cas dans l'exemple représenté. D'autres amplitudes angulaires et d'autres fréquences d'oscillation peuvent également être employées sans sortir du cadre de l'invention.

Sur la figure 6, le balancier 6 est décalé angulairement d'un angle θ, autour de son axe de pivotement virtuel X₂-X'₂, par rapport à sa position de point mort. Il pivote dans le sens S₁, vers sa position de point mort, sous l'effet du rappel exercé par les lames élastiquement flexibles 23a et 23b. La palette d'entrée 13 retient une dent 15A de la denture 12 et, ce faisant, bloque la roue d'échappement 11 à l'encontre du couple moteur en provenance du barillet 1.

Toujours sur la figure 6, la surface de repos 31 de la palette d'entrée 13 glisse sur la dent 15A. Grâce à la courbure de cette surface de repos 31, la direction de la force F₁ appliquée par la dent 15A sur la palette d'entrée 13 passe sensiblement par l'axe de pivotement virtuel X₂-X'₂. Cette force F₁ n'intervient donc pas ou que faiblement dans l'oscillation du balancier 6, et ce quelle que soit son intensité qui décroît à mesure que se désarme le ressort du barillet 1. Cela contribue à un bon isochronisme de l'oscillateur mécanique 7. S'agissant de la courbure de la surface de repos 31 de la palette d'entrée 13, on remarquera que, lorsque cette surface de repos 31 glisse dans un sens puis dans l'autre sur la dent 15A, cette dent 15A reste immobile ou pratiquement immobile, c'est-à-dire ne se déplace pas ou pratiquement pas vers l'amont, dans le sens d'un recul, ou vers l'aval, dans le sens d'une avance.

L'état illustré à la figure 7 suit celui illustré à la figure 6. Sur cette figure 7, la dent 15A est libérée et la roue d'échappement 11 tourne sur elle-même sous l'action du couple moteur en provenance du barillet 1, ce qu'indique la flèche T. La dent 15A applique une impulsion I₁ sur la surface d'impulsion 32 de la palette d'entrée 13. Cette impulsion I₁ s'exerce dans le sens S₁, c'est-à-dire dans le sens dans lequel le pivotement du balancier 6 a alors lieu autour de l'axe de pivotement virtuel X₂-X'₂.

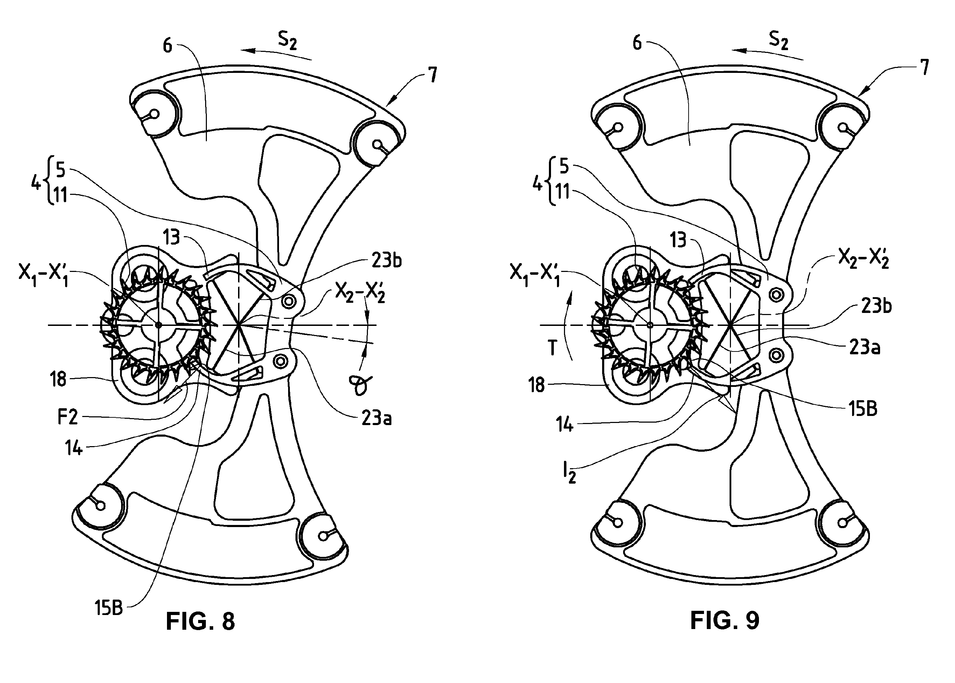

Le pivotement du balancier 6 autour de l'axe de pivotement virtuel X₂-X'₂ continue dans le sens S₁ puis s'inverse, après quoi le mécanisme de réglage 9 est tel qu'illustré à la figure 8.

Sur cette figure 8, le balancier 6 est décalé angulairement d'un angle θ, autour de son axe de pivotement virtuel X₂-X'₂, par rapport à sa position de point mort. Il pivote dans le sens S₂, vers sa position de point mort, sous l'effet du rappel exercé par les lames élastiquement flexibles 23a et 23b. La palette de sortie 14 retient une dent 15B de la denture 12 et, ce faisant, bloque la roue d'échappement 11 à l'encontre du couple moteur en provenance du barillet 1.

Toujours sur la figure 8, la surface de repos 31 de la palette de sortie 14 glisse sur la dent 15B. Grâce à la courbure de cette surface de repos 31, la direction de la force F₂ appliquée par la dent 15B sur la palette de sortie 14 passe sensiblement par l'axe de pivotement virtuel X₂-X'₂. Cette force F₂ n'intervient donc pas ou que faiblement dans l'oscillation du balancier 6, et ce quel que soit son intensité qui décroît à mesure que se désarme le ressort du barillet 1. Cela contribue à un bon isochronisme de l'oscillateur mécanique 7. S'agissant de la courbure de la surface de repos 31 de la palette de sortie 14, on remarquera que, lorsque cette surface de repos 31 glisse dans un sens puis dans l'autre sur la dent 15B, cette dent 15B reste immobile ou pratiquement immobile, c'est-à-dire ne se déplace pas ou pratiquement pas vers l'amont, dans le sens d'un recul, ou vers l'aval, dans le sens d'une avance.

L'état illustré à la figure 9 suit celui illustré à la figure 8. Sur cette figure 9, la dent 15B est libérée et la roue d'échappement 11 tourne sur elle-même sous l'action du couple moteur en provenance du barillet 1, ce qu'indique la flèche T. La dent 15B applique une impulsion I₂ sur la surface d'impulsion 32 de la palette de sortie 14. Cette impulsion I₂ s'exerce dans le sens S₂, c'est-à-dire dans le sens dans lequel le pivotement du balancier 6 a alors lieu autour de l'axe de pivotement virtuel X₂-X'₂.

On remarquera que, pendant le fonctionnement, le couple moteur en provenance du barillet 1 n'interfère pas ou pratiquement pas dans les oscillations du balancier 6, sauf lors des phases d'impulsion, c'est-à-dire durant les phases durant lesquelles sont appliquées les impulsions I₁ et I₂.

A titre de comparaison, la situation est très différente dans le mouvement d'horlogerie proposé dans la demande de brevet européen EP 1 736 838 susmentionnée. En effet, on a trouvé que, dans ce mouvement d'horlogerie, le balancier est accouplé en permanence avec le ressort de barillet. En d'autres termes, le couple de rappel s'exerçant sur le balancier est composé du couple de rappel produit par les lames élastiques supportant ce balancier et d'un couple produit par le ressort de barillet. De ce fait, dans le mouvement d'horlogerie proposé dans la demande de brevet européen EP 1 736 838 susmentionnée, la fréquence d'oscillation du balancier dépend dans une large mesure du degré d'armage du ressort de barillet fournissant le couple moteur d'entraînement de la roue d'échappement. Cela nuit à l'exactitude du comptage du temps dès lors que le degré d'armage du ressort de barillet n'est pas constant dans le temps.

L'invention ne se limite pas au mode de réalisation décrit précédemment. En particulier, un oscillateur mécanique selon l'invention peut être installé dans un tourbillon. De même, un mécanisme de réglage d'une vitesse moyenne selon l'invention peut intallé dans un tourbillon.

L'invention peut être mise en oeuvre dans diverses pièces d'horlogerie. Comme elle peut posséder un faible encombrement, l'invention peut notamment être mise en oeuvre dans une montre telle qu'une montre-bracelet.

## Revendications

1. Oscillateur mécanique pour pièce d'horlogerie, comprenant :
- une embase de montage (18),
- un balancier (6), et
- plusieurs lames élastiquement flexibles (23a, 23b) qui sont élastiquement flexibles dans un plan d'oscillation (P₄) et qui portent et rappellent le balancier (6) de manière que ce balancier (6) soit oscillant angulairement dans le plan d'oscillation (P₄), au moins une première et une deuxième lame élastiquement flexible (23a) parmi les lames élastiquement flexibles comportant chacune deux extrémités opposées, à savoir une première extrémité (24) rigidement unie à l'embase de montage (18) et une deuxième extrémité (26),
**caractérisé en ce qu'**au moins une troisième et une quatrième lame élastiquement flexible (23b) parmi les lames élastiquement flexibles comportent chacune deux extrémités opposées, à savoir une première extrémité (25) rigidement unie au balancier (6) et une deuxième extrémité (26), et **en ce que** les deuxièmes extrémités (26) des première, deuxième, troisième et quatrième lames élastiquement flexibles (23a, 23b) au moins sont rigidement unies les unes aux autres.

2. Oscillateur mécanique selon la revendication 1, **caractérisé en ce que** les deuxièmes extrémités (26) des première, deuxième, troisième et quatrième lames élastiquement flexibles (23a, 23b) sont rigidement unies les unes aux autres par une partie d'accouplement (27), les premières extrémités (24) des première et deuxième lames élastiquement flexibles (23a) étant décalées angulairement l'une de l'autre d'un angle (α) compris entre 80° et 150°, autour d'un axe perpendiculaire au plan d'oscillation (P₄) et centré sur la partie d'accouplement (27), les premières extrémités (25) des troisième et quatrième lames élastiquement flexibles (23b) étant décalées angulairement l'une de l'autre d'un angle (α) compris entre 80° et 150°, autour de l'axe perpendiculaire au plan d'oscillation (P₄) et centré sur la partie d'accouplement (27).

3. Oscillateur mécanique selon la revendication 2, **caractérisé en ce que** les premières extrémités (24) des première et deuxième lames élastiquement flexibles (23a) sont décalées angulairement l'une de l'autre d'un angle (α) de l'ordre de 120°, autour de l'axe perpendiculaire au plan d'oscillation (P₄) et centré sur la partie d'accouplement (27), les premières extrémités (25) des troisième et quatrième lames élastiquement flexibles (23b) étant décalées angulairement l'une de l'autre d'un angle de l'ordre de 120°, autour de l'axe perpendiculaire au plan d'oscillation (P₄) et centré sur la partie d'accouplement (27).

4. Oscillateur mécanique selon l'une quelconque des revendications précédentes, **caractérisé en ce qu'**au moins une partie de l'embase de montage (18), au moins une partie du balancier (6) et les première, deuxième, troisième et quatrième lames élastiquement flexibles (23a, 23b) font partie d'une même pièce d'un seul tenant.

5. Oscillateur mécanique selon la revendication 4, **caractérisé en ce qu'**au moins une partie de l'embase de montage (18), au moins une partie du balancier (6) et les première, deuxième, troisième et quatrième lames élastiquement flexibles (23a, 23b) sont réalisées en silicium et/ou en oxyde de silicium.

6. Oscillateur mécanique selon l'une quelconque des revendications précédentes, **caractérisé en ce que** les deuxièmes extrémités (26) des première, deuxième, troisième et quatrième lames élastiquement flexibles (23a, 23b) sont rigidement unies les unes aux autres par une partie d'accouplement (27) se trouvant sensiblement à égale distance des premières extrémités (24, 25) des première, deuxième, troisième et quatrième lames élastiquement flexibles (23a, 23b).

7. Oscillateur mécanique selon l'une quelconque des revendications précédentes, **caractérisé en ce que** les deuxièmes extrémités (26) des première, deuxième, troisième et quatrième lames élastiquement flexibles (23a, 23b) sont rigidement unies les unes aux autres par une partie d'accouplement (27), le balancier (6) possédant un centre de gravité se trouvant sensiblement à la partie d'accouplement (27).

8. Oscillateur mécanique selon l'une quelconque des revendications précédentes, **caractérisé en ce que** les première et deuxième lames élastiquement flexibles (23a) sont sensiblement symétriques entre elles par rapport à un plan (P₁), les troisième et quatrième lames élastiquement flexibles (23a) étant sensiblement symétriques entre elles par rapport à ce plan (P₁).

9. Oscillateur mécanique selon l'une quelconque des revendications précédentes, **caractérisé en ce que** l'embase de montage (18) comporte deux butées (20) qui sont des butées de fin de course pour le balancier (6) et qui définissent une course angulaire maximale du balancier (6) en empêchant ce balancier (6) d'aller au-delà de deux extrémités opposées de cette course angulaire maximale.

10. Oscillateur mécanique selon l'une quelconque des revendications précédentes, **caractérisé en ce que** le balancier (6) comporte deux ailes opposées (28) et une traverse (21) reliant ces deux ailes (28) entre elles, les premières extrémités (25) des troisième et quatrième lames élastiquement flexibles (23b) étant rigidement unies à ladite traverse (21).

11. Mécanisme de réglage d'une vitesse de rotation moyenne dans un mouvement d'horlogerie, **caractérisé en ce qu'**il comprend un oscillateur mécanique (7) selon l'une quelconque des revendications précédentes, ainsi qu'un échappement (4) agencé pour interagir avec l'oscillateur mécanique (7) de manière que l'échappement (4) transfère à l'oscillateur mécanique (7) l'énergie d'entretien des oscillations de cet oscillateur mécanique (7) et qu'une fréquence de l'oscillateur mécanique (7) règle une vitesse de rotation moyenne d'une roue d'échappement (11) de l'échappement (4).

12. Mécanisme de réglage selon la revendication 11, **caractérisé en ce que** l'échappement (4) comporte une ancre (5) comprenant deux palettes rigides (13, 14) qui sont solidaires rigidement du balancier (6) et agencées pour coopérer alternativement avec une denture (12) de la roue d'échappement (11) lorsque le balancier (6) oscille angulairement, chaque palette (13, 14) comportant un côté amont formant une surface de repos (31) pour bloquer successivement des dents (15) de la denture (12) vers l'aval à l'encontre d'un couple moteur d'entraînement de la roue d'échappement (11), chaque palette (13, 14) comportant une surface terminale formant une surface d'impulsion (32) pour recevoir successivement des impulsions de la part de la denture (12).

13. Mécanisme de réglage selon la revendication 12, **caractérisé en ce que** chaque surface de repos (31) se recourbe vers l'autre surface de repos (31).

14. Mécanisme de réglage selon la revendication 13, **caractérisé en ce que** chaque surface de repos (31) se recourbe vers l'autre surface de repos (31) de manière à pouvoir glisser sur une dent (15) de la denture (12), lors d'une oscillation angulaire du balancier (6), en ne provoquant pas ou sensiblement pas de mouvement de rotation de la roue d'échappement (11).

15. Mouvement d'horlogerie, comprenant un organe moteur (1), un rouage (2) entraîné par l'organe moteur, **caractérisé en ce qu'**il comprend un mécanisme de réglage (9) selon l'une quelconque des revendications 10 à 14, la roue d'échappement (11) étant entraînée par le rouage (2).
